# EUROPEAN PATENT APPLICATION

(11) **EP 2 818 832 A2**
(43) Date of publication of application: **31.12.2014**
(21) Application number: 14171571.4
(22) Date of filing: 06.06.2014
(51) Int. Cl.: G01C 21/36

(54) **Method, apparatus and device for representing POI on a map**

(30) Priority: 26.06.2013 IN CH27992013
(71) Applicant: ROBERT BOSCH GMBH, 70442 Stuttgart (DE); Robert Bosch Engineering And Business Solutions Limited, Bangalore 560 095 State of Karnataka (IN)
(72) Inventor: Arunkumar, Sreeja, 635109 Onnalvadi, Karappalli, Hosur, TamilNadu (IN)
(74) Representative: Bee, Joachim

(57) **Abstract**

According to an aspect of the present disclosure, the navigation device dynamically generate POI icon image representing its attributes. The constructed icon of the POI is then displayed on the map along the route. In one embodiment, attributes are prioritized and the icon is constructed accordingly to represent the prioritized attributes for a set of preferred POIs. According to another aspect of the present disclosure, The POI icons are automatically updated by the navigation device based on the status at a given time point. Thus, the present navigation device enable user to make an informed decision.

## Description

### FIELD OF INVENTION:

Embodiments of the present disclosure relate generally to navigation device and in particular to a method, apparatus and device for representing POI on a map.

### BACKGROUND:

A navigation device is often deployed in a mobile, handheld device or in a vehicle to guide, assist and enable user on a trip or a journey. Further, the navigation devices are also used to plan possible routes, alternate routes or a journey. The navigation device often makes use of the geographical data, maps, route information, and other information to assist the user. The navigation device also often provides the user location information on the map and further may guide the user to reach the destination by tracking the device or vehicle on the map. These navigation devices may also provide information pertaining to a waypoint or Point of Interest (POI). The waypoint or POI is a specific point location that a person may find useful or interesting. For example, POI may be a hospital, bank, restaurant, gas station, cinema halls, tourist attraction, or the like. The conventional navigation devices stores information related to POIs in the memory. The information is used to display POI on the route map. Conventional navigation devices use bit map images for representing POIs and text and/or audio for representing the attributes on the route map. The operation of the convention navigation device may be seen in US patents publication numbers US-20090040370, US-20090055774, US-20100161215.

### OBJECT OF THE INVENTION:

According to an aspect of the present disclosure, the navigation device dynamically generate POI icon image representing its attributes. The constructed icon of the POI is then displayed on the map along the route. In one embodiment, attributes are prioritized and the icon is constructed accordingly to represent the prioritized attributes for a set of preferred POIs. According to another aspect of the present disclosure, The POI icons are automatically updated by the navigation device based on the status at a given time point. Thus, the present navigation device enable user to make an informed decision.

Several embodiments are described below, with reference to diagrams for illustration. It should be understood that numerous specific details are set forth to provide a full understanding of the invention. One skilled in the relevant art, however, will readily recognize that embodiments may be practiced without one or more of the specific details, or with other methods, etc. In other instances, well-known structures or operations are not shown in detail to avoid obscuring the features of the invention.

### ADVANTAGES OF THE INVENTION:

The navigation device dynamically constructs a unified icon representing POIs and its related attributes. The navigation device displays the unified icon visually indicating all the information about the POI such as status of the POI, facilities available in the POI etc. Using which, the user may take informed decision about the POI without further interacting with the device for more information. Further, this may save the time and energy as there is no need to visit each POI to check the status and available facilities.

### BRIEF DESCRIPTION OF DRAWINGS:

Figure 1A is a block diagram of an example environment in which various aspect of the present disclosure may be seen.
Figure 2 is block diagram of an example navigation device 299 configured to notify at least one POI information on the journey.
Figure 3A is a block diagram illustrating method of deriving and representing POIs, attributes and other related information in one embodiment of the present disclosure.
Figure 3B is a table of example attributes and corresponding images in one embodiment of the present disclosure.
Figure 4 illustrates the process of creation of unified icon with POI and its attributes in one embodiment of the present disclosure.
Figure 5A-5D illustrates example POI icon with different attributes in one embodiment of the present disclosure.
Figure 5E illustrates another example unified icon representing the status of POI and its attributes.
Figure 6 is an example user interface display window of the mobile (navigation) device 299 of the present disclosure.
Figure 7 is an example output of the navigation device in one embodiment of the present disclosure.

### DESCRIPTION OF THE INVENTION:

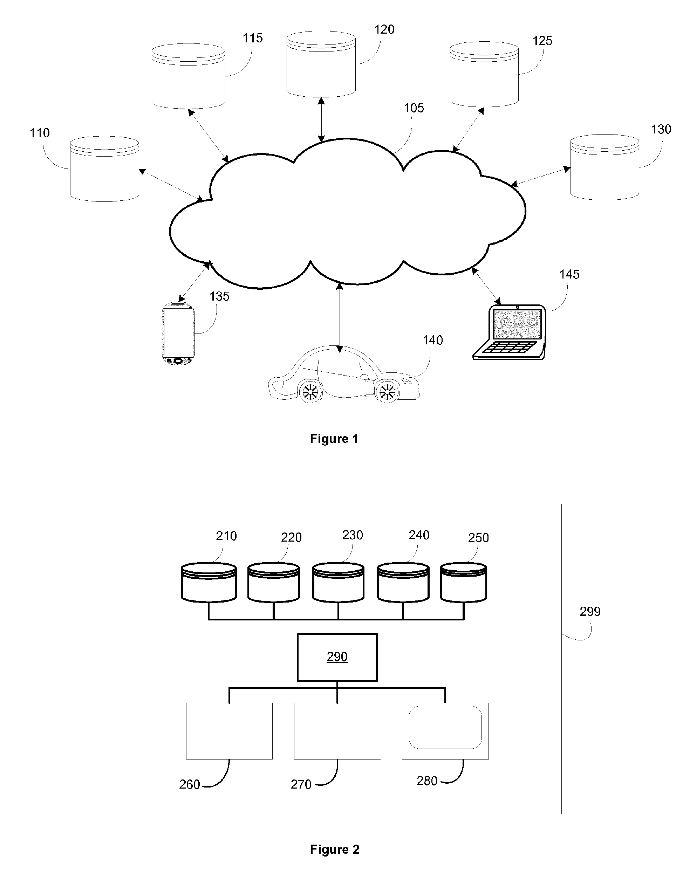

Figure 1A is a block diagram of an example environment in which various aspect of the present disclosure may be seen. The block diagram is shown comprising a wireless communication network 105, navigation database 110, point of interest (POI) database 115, attributes database 120, general information database 125, custom database 130, and mobile devices for example a mobile device 135, a car equipped with vehicle navigation device 140 and personal computer 145.

The navigation database 105 contains information/data that may be used for navigation related services. For example, the navigation database 105 may include information such as, but not limited to road records, road network data, map records, and other routing information. The road record may comprise the details of the roads in the digital or vector format. For example, a road data may be stored as sequence of geographical points (latitude, longitude) with a start and end point. Alternatively, the road data may be stored with a mathematical relationship representing a contour of the road with a start and end point. The roads may be further classified using number of parameters. Example parameter may comprise two lane road, four lane road, and road with dividers, cross road, state highway, national highway, etc. In one embodiment, the road data may be stored as one or more layers in the map data. For example main road data may be stored in one layer and state highway data may be stored in another layer.

The POI database 115 contains information/data related to POIs. The POIs may be hotel, restaurant, petrol station, airport, or the like (generally referred to as "category" in this disclosure). The attribute database 120 comprises attributes related to one or more POIs. The attributes may define quality, status and other related information of the POIs. The one or more attributes of the POI may help user to make an informed decision on the utility of the POI. For example, a hotel (an example POI) may have attributes such as type of food offered (vegetarian, Non-Vegetarian, Vegan), opening hours, quality of food, ranking, ambience, restroom availability, bar, accommodation etc.. In one embodiment, image(s) representing each attribute of the POI are stored in attribute database 120. Images are bit map images of suitable size for representing as icon.

The general information database 125 contains other information/data representing point of interest such as historical places, banks, restaurants, fuel filling stations, museums, stadiums, offices, auto repair shops, buildings, stores, etc. The general information database 125 also contains information related to traffic, restricted zones. The databases 110, 115, 120, 125, 130 may store data in one or more different layers. Further, the databases may also comprise online real time data like weather updates etc.

The custom database 130 contains information/data related to attributes or POI that are updated by an individual during a journey. In one embodiment, the custom database 130 comprises the attributes or POIs that are customized to a particular user and may not be present in the other databases. The user may update new point of interests or new attributes for a particular POI during a journey. For example, if the user prefers to exercise the same hotel (POI) for the next journeys, then the user may update "preferred" attribute (image for reference) to the custom database 130. During the next journey, the navigation device derives custom database 130 and prefers and provides information about the updated POI. In another embodiment, the user may set the new attribute as "global", making it available for all users of database.

The mobile devices 135 through 145 may comprise navigation device/engine/application configured to provide POI related information to the user during the journey. In one embodiment, the mobile device 135-145 may receive user preferences such as trip source, destination, journey date and time, POI etc. The navigation device accesses the data from at least one database 110,115,120,125 and 130 to determine and notify the POIs and related attributes throughout the journey (or during the planning phase of the journey).

Figure 2 is block diagram of an example navigation device 299 configured to notify at least one POI information on the journey. The navigation device 299 is shown comprising internal databases 210, 220, 230, 240 and 250, a navigation engine 260, an input unit 270, a display unit 280 and a database interface 290. The internal databases 210, 220, 230, 240 and 250 respectively stores data as in the database 110,115,120,125 and 130 as described above in Figure 1. The internal database of the navigation device 299 may be updated by connecting to at least one external database 110,115,120, 125 and 130, through a communication network interface. The navigation engine 260 is configured to notify the user's POIs and related attributes by accessing at least one relevant database from the databases 210, 220, 230, 240 and 250 though the database interface 299.

The input unit 270 comprises devices such as keypad, microphone, switches etc. configured to receive the user input. On the other hand, a display unit may be provided with a touch screen as the input unit 270. The user may provide all the preferences/information related to the journey through the input unit 270.

The output unit 280 comprises a display screen, audio output, text output etc. to display image, maps POIs, and video, audio, textual information. The display screen is configured to display map with all the information requested by the user and information related to POIs and attributes. The display screen displays map and journey route from source to destination on the map. In one embodiment, the display unit 280 displays at least one point of interests, its attributes and related information on the map. In another embodiment, a switch or an option on the display screen may be provided to switch on/off the attributes display. The manner in which POIs, attributes and related information are displayed in one embodiment is described below in further detail.

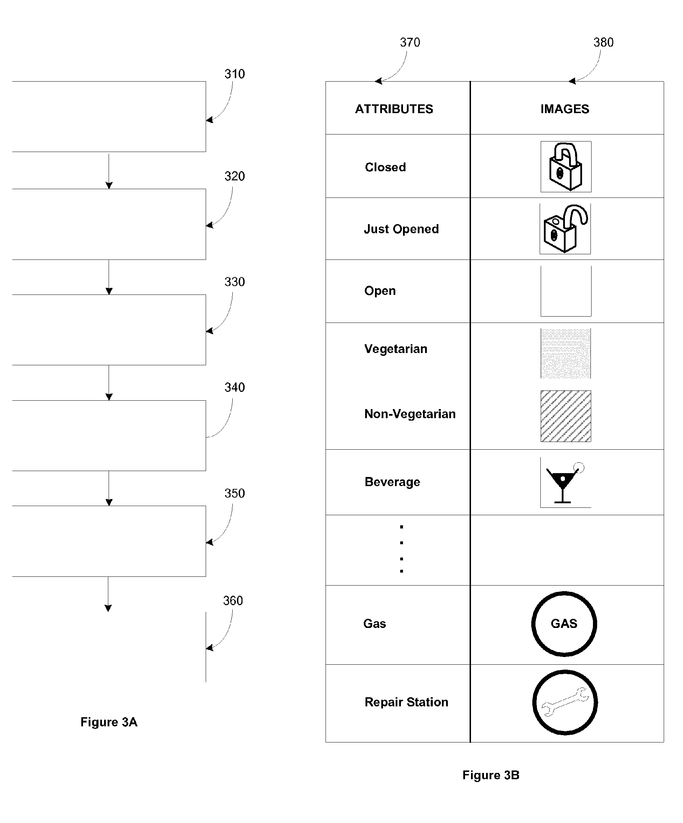

Figure 3A is a block diagram illustrating method of deriving and representing POIs, attributes and other related information in one embodiment of the present disclosure. In block 310, the navigation device 299 (or any of the mobile devices) receives user specifications related to journey/trip. The user specifications may include journey start point (source), end point (destination), preferred POIs, attribute priority, journey date, time etc. The navigation device 299 may receive one or more user specifications through input devices such as keypad, microphone, touch screen etc. (input unit 270).

In block 320, the navigation device 299 determines its current position from global positioning system (GPS) and/or Inertial Navigation System (INS) data. Also, the navigation device 299 dynamically determines information related to geographic locations, date, time, POIs etc. The navigation device 299 may store the determined information for further processing or information may be processed dynamically to retrieve POIs, attributes and other related information from one or more internal or external databases 110 to 130.

In block 330, the navigation device 299 retrieves relevant points of interests (POIs). In one embodiment of present disclosure, the navigation device 299 retrieves one or more POIs such as restaurants, hospitals, petrol stations etc., relevant to the route on which the journey is being made or a selected route. On the other hand, navigation device may retrieve the POIs corresponding to an area of interest through which the journey is being made or proposed. The navigation device 299 retrieves one or more POIs corresponding to a particular location on approaching the location. In one embodiment, navigation device 299 retrieves the POI from data base by applying various filters options such as POIs along the route, near start/end points (source and destination), near a particular location, popular POIs, and the filter options selected though a menu. The navigation device 299 may retrieve information related to user preferred POIs from the POI database 115 or the custom database 130.

In another embodiment, the navigation device may retrieve one or more attributes and/or information related to POIs from the other sources through internet. In general, the navigation device retrieves static and/or dynamic attributes from one or more sources such as database, internet etc.

In block 340, the navigation device 299 retrieves one or more attribute images/icons of the POI. The navigation device 299 may use information such as date, time, etc., to retrieve the attribute icons from the attribute database 120 or from the custom database 130. The navigation device 299 may retrieve the attributes images corresponding POIs retrieved in block 340.

In block 350, the navigation device 299 prioritizes and superimposes derived images of the attributes of the POI to form an icon. In one embodiment, the navigation device 299 may prioritize the retrieved attributes images/icons based on one or more parameters, for example, as specified by the user like open or closed hours, user preferences, user reviews, user ratings and other related standards etc. to form an icon. The navigation device 299 may superimpose one or more prioritized attribute images using any known technique.

In block 360, the navigation device 299 displays the icon representing the attributes of the POI. The navigation device 299 may display the icon on the display unit. The icon may indicate one or more attributes of the POIs. For example, if the POI is a restaurant/hotel, then the icon may represent one or more attributes such as closed, open, vegetarian or non-vegetarian, ac or non-ac, parking facilities, etc. On the other hand, the attributes also may represent, user reviews, user rating, custom information etc.

Figure 3B is a table of example attributes and corresponding images in one embodiment of the present disclosure. The table (may be stored in a database) shown comprising an attribute column 370 and an image column 380. The attribute column 370 shown with example attributes closed, just opened, open, vegetarian, non-vegetarian, beverage, gas and repair station. The image column 380 shown comprising images for each attributes. The navigation device 299 retrieves one or more attribute images from the database and/or from the internet to form a unified icon representing the attributes of the POI.

For example, a navigation device (equipped within a car) travelling from source to destination, determines the current position/location of the car. The navigation device then determines the POIs around that particular location (on the route). If the POI is a restaurant, then the navigation device determines other navigation information such as date, time, week etc. to retrieve the relevant attributes or attribute values for the particular POI. For example, if the time is 11AM (restaurant opening time) on a Sunday, the navigation device retrieves all the relevant attributes from the table for example, just opened from row 2, vegetarian from row 4 etc. On the other hand, device may extract a value representing the opening time and compare with the current time to retrieve the corresponding image. The navigation device prioritizes and superimposes the retrieved images to form a unified icon that represents the status of the POI and/or information related to POI (restaurant) such as that the restaurant is just opened, opening and closing time, it is a vegetarian restaurant, peak hour, parking available etc. The manner in which the navigation device creates a unified icon is described in further detail below.

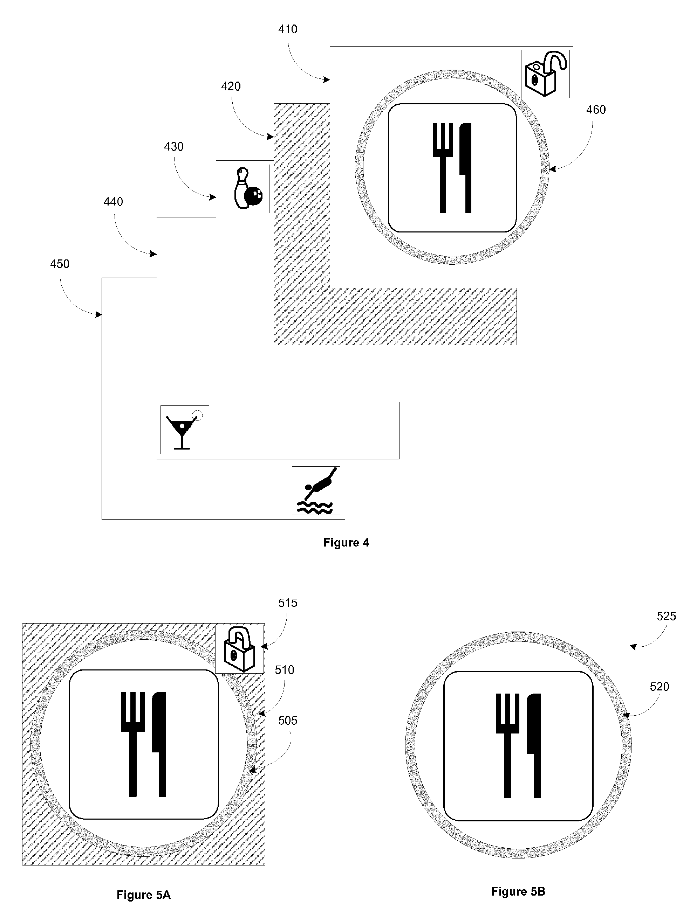

Figure 4 illustrates the process of creation of unified icon with POI and its attributes in one embodiment of the present disclosure. The Figure 4 shows multiple layers of images (410-450) representing one or more attributes in which attribute layer 410 is having highest priority and attribute layer 450 is having lowest priority. The navigation device may prioritize the retrieved attribute icon (image) based on the user input. On the other hand, the navigation device 299 may prioritize the attributes based on one or more parameters, for example, the status of the POIs such as open or closed (for example, at the time of approach of the POI), history, user reviews, user ratings and other related standards etc. As shown in figure 4, attribute layer 410 is superimposed on the POI (restaurant) image 460. The attribute 410 indicates the attribute "restaurant is just opened" and it is set to highest priority in this example. Similarly, attribute layer 420 indicating the type of restaurant (vegetarian, non-vegetarian) having second highest priority in this example, is superimposed on the POI image 460.

Attribute layer 430 indicates the gaming zone facility, attribute layer 440 indicates (representing) beverage facility and attribute layer 450 indicates swimming pool facility are superimposed on the POI image 460 based on that priority order. In another embodiment, the attribute having highest priority is made clearly visible to the user.

In another embodiment, POI categories (restaurants, hotels only) for which a particular or a set of attributes needs to be displayed may be made configurable. On the other hand, the user may also change the attributes priority by selecting the attribute icons on the display/map. In another embodiment, the navigation device may change attribute priorities of all the displayed POIs (unified icons) when the user changes the attribute priorities of one of the POI. For example, when the restaurant opening time is displayed on the POI and user presses on top of that, all other POIs will also be made to display the restaurant opening time on top of the unified icon.

In another embodiment, the attributes may be directly edited by selecting the POI image. The navigation device retrieving the POI image may edit the attributes to the POI image using any known image editing technology. In another embodiment, the user may manually edit and upload the POI images.

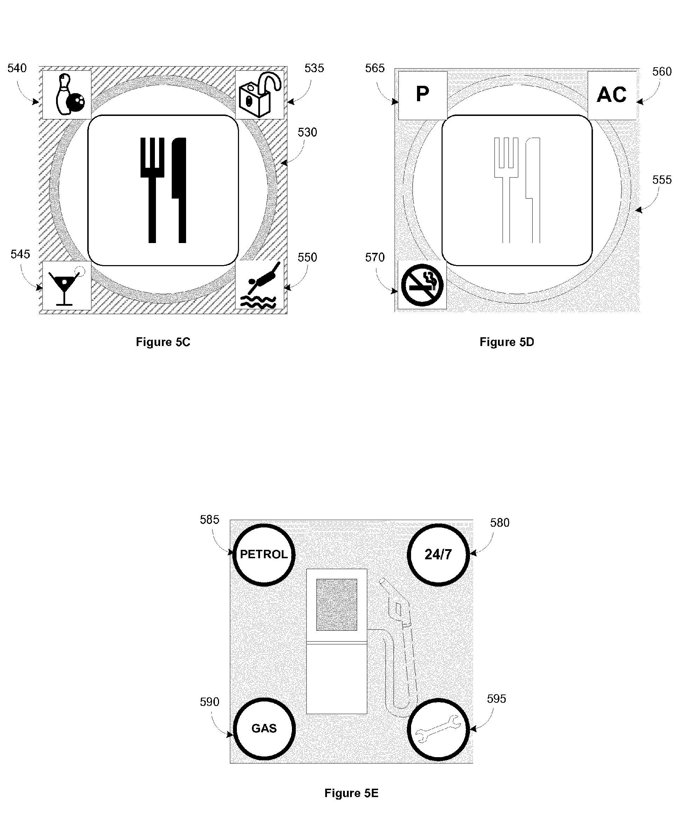

Figure 5A-5D illustrates example POI icon with different attributes in one embodiment of the present disclosure. Each icon is described below in further detail. Figure 5A is an icon of a POI showing the attributes. The portion 505 indicates POI is a restaurant and this portion may be derived from the layer 460. The background color 510 (stripes representing red color) derived from the attribute layer 420 indicates that the restaurant is a non-vegetarian restaurant. The top left portion 515 indicates the POI current status as "closed hours" with a locked icon derived from the attribute layer 410. In another embodiment, Figure 5B is an example POI icon wherein, icon 520 indicates that it is a restaurant, white color background 525 which may be derived from the attribute layer 420 indicates as a vegetarian restaurant and the unified icon indicates that the restaurant is open as there is no "lock" icon in any portion of the image. Figure 5C illustrates an example POI icon with one or more attributes superimposed on it. The background 530 indicates that it is a non-vegetarian restaurant comprising four parameters of comfort facility. The unlocked icon (top left portion) 535 indicates restaurant is opened just now, which indicates the user that there might be some initial delay. The top right portion 540 indicates availability of gaming zone in the restaurant, bottom right portion 545 indicates that the restaurant is having beverages facility and bottom left portion 550 indicates that the restaurant is having services like swimming pool etc. One or more portion of the unified icon may be derived from attribute layers 410 to 450.

In another embodiment, Figure 5D illustrates another example attributes of the POI. The background 555 indicates its vegetarian restaurant. The top left portion 560 indicates restaurant is having air condition facility and top right portion 565 indicates that the restaurant is having valet parking facility. The bottom right portion 570 indicates that smoking is prohibited inside the restaurant.

Figure 5E illustrates another example unified icon representing the status of POI and its attributes. As shown in the figure 5E, the unified icon indicates that the POI is a fuel station. The top left portion 580 of the unified icon indicates that the fuel station service is available for 24/7. The top right portion 585 and bottom right portion 590 of the unified icon indicates that the fuel station is having both petrol and gas filling facility. The bottom left portion 595 indicates that the fuel station has an automobile repair station.

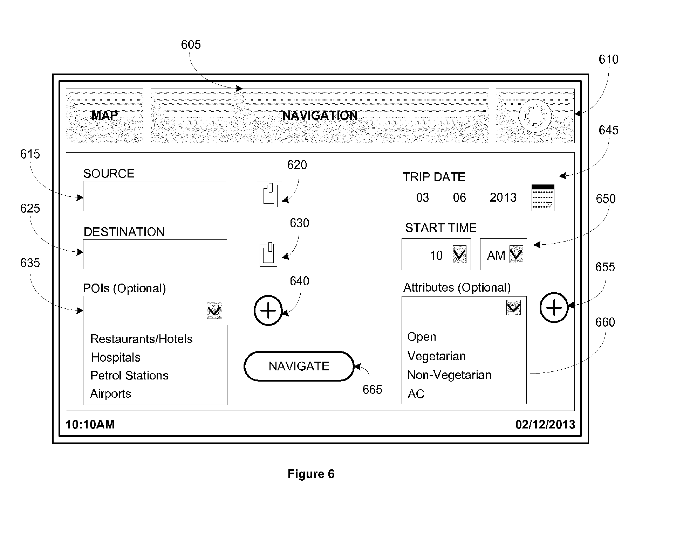

Though the attributes are indicated in the corners, the attributes may be made visible, recognizable by using other superimposition techniques and/or by adjusting the size, shape, color, providing additional visual effects (time gap per attribute icon display). For example, the attributes may be made to flicker on the icon in an order. On the other hand, the icons may be of any size, shape and may be transparent or partially visible. All such variant representations apparent to one skilled in the art by reading this disclosure are made part of this disclosure. Figure 6 is an example user interface display window of the mobile (navigation) device 299 of the present disclosure. The navigation device user interface 605 comprising various fields like settings 610, source 615, destination 625, selection fields 620 and 630, POIs 635, trip date 645, start time 650, attributes 660, add buttons 640 and 655, and a navigate button 665. The user may enter trip starting location at "source" field 615. Alternatively, user may click on the button 620 which enables the user to select the starting location from the map or list of standard or perused starting points. Similarly, the user may enter the destination in "destination" field 625 and/or may select the destination location from the map, history etc using button 630. In one embodiment, an optional "POIs" drop down box 635 provides one or more POIs such as restaurant/hotels, hospitals, petrol stations, airports etc. The add button 640 enables the user to add more POIs from the drop down list. In another embodiment, an optional "attributes" drop down box 660 provides one or more attributes such as open, vegetarian, non-vegetarian, ac, non-ac, etc. The add button 655 enables the user to add more attributes from the drop down list. Similarly, the user may select trip date using "trip date" field 645 and trip start time using "start time" field 650. Clicking on "navigate" button 665 submits/sends the user input to the processing to determine and suggest the POIs and corresponding attributes on map.

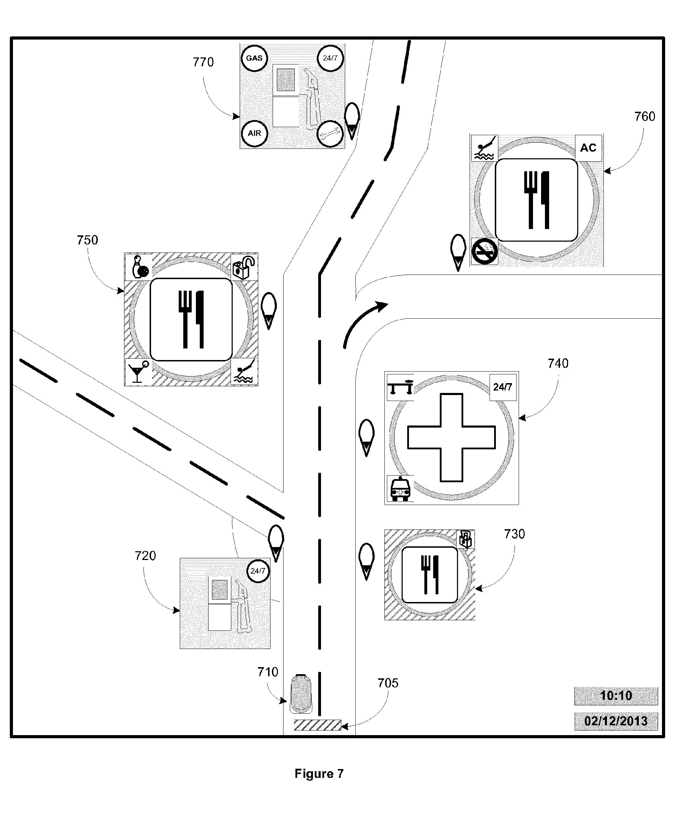

Figure 7 is an example output of the navigation device in one embodiment of the present disclosure. In one embodiment, the navigation device displays a map on which various POIs of the same or different categories and corresponding attributes, current location of the user and other related information. The navigation device indicates that the car 710 is travelling from starting point 705 towards the POI 770. As the car 710 approaches the POIs on the journey, the navigation device displays the POI image with one or more related attribute icon superimposed on the POI image. The attribute icons indicate the status of the POI, facilities available in the POI and other POI related information. As shown in the map, car 705 approaching the POI 720 (fuel station), the navigation device displays the POI image with attribute icon indicating that the fuel station will be open 24/7. Similarly, as the car 710 approaches POIs 730, 740, 750, 760 770, the navigation device displays corresponding POI images with one or more superimposed attribute icons indicating the status of the POIs. In another embodiment, POI images may be enlarged by clicking on POI images which may enable clear visibility of all attributes.

While various embodiments of the present invention have been described above, it should be understood that they have been presented by way of example only, and not limitation. Thus, the breadth and scope of the present invention should not be limited by any of the above described exemplary embodiments, but should be defined only in accordance with the following claims and their equivalents.

## Claims

1. A navigation device (299) for displaying a preferred point of interest (POI) (635) with set of attributes (655) at a time instance on a map comprising:
an user interface (270) configured to receive the preferred point of interest (POI);
a database interface (299) configured to access a preferred POI (635) image and set of images;
a navigation engine (260) configured to create a first icon by superimposing the set of images in the order of priority on the preferred POI image (460), wherein the set of images are selected based on a value of at least one attribute at the time instance; and
a display interface (280) configured to display the first icon on the route map;

2. The navigation device (299) of claim 1, wherein the first icon is a bit map image (460) and the set of images are superimposed such that at least a part of each image is visible on the first icon, wherein the part comprise indication of the attribute value.

3. The navigation device (299) of claim 2, wherein the user interface (270) is further configured to receive the order of priority for the set of attributes from a user.

4. The navigation device (299) of claim 3, wherein the navigation engine (260) is further configured to dynamically determine the set of attribute values at the time instance corresponding to set of attributes and the database interface (290) is further configured to access the set of images based on the set of attribute values.

5. The navigation device (299) of claim 4 wherein the time instance is the time at which the navigation device (299) is within a first distance limit from the preferred POI (635).

6. A method for displaying a preferred point of interest (POI) (635) with set of attributes at a time instance on a route map on a navigation device (299), the method comprising:
receiving the preferred point of interest (POI) (635);
accessing the preferred POI image (460) and set of images;
to creating a first icon by supper imposing the set of images in the order of priority on the preferred POI image, wherein the set of images are selected based on a value of at least one attribute at the time instance; and
displaying the first icon on the map;

7. The method of claim 6, wherein the first icon is a bit map image and the set of images are superimposed such that at least a part of each image is visible on the first icon, wherein the part representing the attribute value.

8. The method of claim 7, further comprising receiving the order of priority for the set of attributes from a user.

9. The method of claim 8, further comprising dynamically determining the set of attribute values at the time instance corresponding to set of attributes and accessing the set of images based on the set of attribute values.

10. The method of claim 9, wherein the time instance is the time at which the navigation device (299) is within a first distance limit from the preferred POI.

11. A method, system and apparatus comprising one or more features as set forth in the sections of the specification.
